# EUROPEAN PATENT SPECIFICATION

(11) **EP 1 584 209 B1**
(45) Date of publication and mention of the grant of the patent: **28.06.2006**
(21) Application number: 03815045.4
(22) Date of filing: 13.01.2003
(51) Int. Cl.: H04Q 7/34, G06F 9/445

(54) **RECONFIGURATION OF HETEROGENEOUS, PROGRAMMABLE PLATFORMS**
UMKONFIGURATION VON HETEROGENEN PROGRAMMIERBAREN PLATTFORMEN
RECONFIGURATION DE PLATES-FORMES PROGRAMMABLES HETEROGENES

(43) Date of publication of application: 12.10.2005
(73) Proprietor: NTT DoCoMo, Inc., Tokyo 100-6150 (JP)
(72) Inventor: PREHOFER, Christian, 81477 München (DE); KELLERER, Wolfgang, 82256 Fürstenfeldbruck (DE); HIRSCHFELD, Robert, 98693 Ilmenau (DE); BERNDT, Hendrik, 85399 Hallbergmoos (DE); KAWAMURA, Katsuya, Singapore 319773 (SG)
(74) Representative: HOFFMANN EITLE
(86) International application number: PCT/EP2003/000245
(87) International publication number: WO 2004/064429

(56) References cited:
- WO-A-01/93030
- WO-A-99/34557
- US-B1- 6 240 373

## Description

### FIELD OF INVENTION

The present invention relates to reconfiguration of heterogeneous, programmable platforms, and in particular to a method of reconfiguring a hierarchy of programmable platforms establishing a mobile communication system architecture and a related reconfiguration agent.

### TECHNICAL BACKGROUND

In WO 01/93030 A1, there is described a method to set up automatically a computer system configuration in association with a system upgrade that involves the installation of a set of operative elements necessary for the reliable operation of the same. The correct, operative combination of hardware, system and application software components is accomplished by inter-component dependency checking and conflict resolving procedures in association with specific dependency rules tables and an ordered database that stores definitions of components and relationships thereof.

Also, in WO 99/34557, there is described a system and method for software version management, including a network management system, a network manager, and at least one network element. The software version management process identifies a first managed object tree having a plurality of managed objects to be upgraded. The managed object tree is used to generate a second managed object tree. The second managed object tree is generated by transforming the topology of the first managed object tree. After the second managed object tree has been generated, the plurality of managed objects are data transformed. Data transformation is accomplished by data transformation functions executed to upgrade the individual managed objects.

In US-B1-6,240,373, there is described a management method and apparatus for remote cable-locating transmitters using a database that stores information about each transmitter, including information about the particular version.of its operating software. When a software upgrade becomes available, the database is accessed to identify and select those transmitters that need the upgrade. The upgrade is then communicated to each selected cable-locating transmitter, typically via a dial-up communication link.

Therefore, the reconfiguration of complex system architectures, e.g., mobile communication systems, is an on-going task in the field of extending existing system architectures and of deployment of new services. Typically, reconfiguration of complex system architectures requires the installation of new service components. Assuming that the system architecture is based on a plurality of reconfigurable platforms implementing system functionality on different levels of abstraction, such new service components generally have to be reconfigured on all platforms.

In particular, different platforms may support very different forms of programmability/reconfigurability and a coordination and synchronization of the reconfiguration process on different platforms should be supported. Examples for such different platforms are application specific integrated circuits ASIC, digital signal processors DSP, network processors, HF components, operating system, virtual machine, etc.

However, this is particularly complicated since the reconfiguration process usually depends on different platform characteristics. While for some platforms components may be added easily, for other platforms components must be exchanged, leading to interruption of services using these components. Even worse, for some platforms the complete platform functionality may have to be stopped and a re-start may only be possible after installation of new platform components.

So far, the following forms of component reconfiguration have been proposed:
A first form of reconfiguration is component configuration either before system start-up, e.g., during development or deployment of system architecture, or at run-time.
A second form of reconfiguration is parameterization of software as classical way to introduce flexibility without the need of software up-dates.
A third form of reconfiguration is complete software update or exchange, with firmware update of system devices as a classical example. This often requires system devices or servers to be made unavailable for some period of time.
A fourth form of reconfiguration is partial software update in a complex software system. As very often there are no open interfaces in the system, the result may be that the system behaviour has to be re-evaluated with possible service interruption as negative consequence.
A fifth form of reconfiguration is the installation of components in open platforms providing an interface design ensuring proper functionality and supporting seamless service evolution.

From the above, it should be clear that the different forms of reconfiguration as known in the art only support very specific forms of reconfiguration without any synchronization and coordination of reconfiguration on different platforms. Also, the different forms of reconfiguration do not consider platform characteristics in an adequate way.

### SUMMARY OF INVENTION

In view of the above, the object of the present invention is the provision of an integrated management of platform capabilities and related components as well as dependencies therebetween during reconfiguration of heterogeneous, programmable platforms establishing a hierarchical system architecture.

According to the present invention, this object is achieved through a method according to claim 1 of reconfiguring a hierarchy of programmable platforms establishing a mobile communication system architecture. The method comprises a first step of determining platform components across the hierarchy of programmable platforms to be reconfigured for set-up of a new service in the mobile communication system. Further the method comprises a second step of reconfiguring platform components across the hierarchy of programmable platforms in an order derived from corresponding platform reconfiguration characteristics.

Therefore, contrary to pre-existing reconfiguration approaches, the present invention supports the consideration of components lying in different programmable platforms of a hierarchical system architecture at the same time. Further, the present invention supports consideration of reconfiguration characteristics so as to achieve a coordinated reconfiguration of platform components on different levels of hierarchy in the system architecture. The combined approach of determining platform components to be reconfigured across a hierarchy of programmable platforms in a system architecture in combination with consideration of related platform characteristics according to the present invention therefore leads to a minimization of service interruption and overall system down-time during the reconfiguration process.

Also, the present invention allows for a differentiation between platform component reconfiguration requiring a re-start of the related programmable platform and a platform component reconfiguration not necessitating such a re-start. Therefore, according to the present invention it is possible to consider not only the specifics of a platform component to be reconfigured, but also the computation of environment of such a platform component which allows for an optimised reconfiguration process.

Also, according to the present invention, it is proposed to first reconfigure those platform components where no re-start of the corresponding programmable platforms is necessary. The overall benefit of this approach is that the reconfiguration process will not lead to an interruption of the system services as long as such platform components are installed. Only at the time when all such platform components without re-start of the corresponding programmable platforms are reconfigured, there will follow the reconfiguration of platform components which require a re-start of the corresponding programmable platform. The understanding underlying this approach is that at the time when the reconfiguration of the latter platform components starts, all platform components that may be reconfigured without interruption of system performance will be successfully reconfigured, thereby providing an optimal start environment for those platform components requiring a re-start of related programmable platform. Overall, this preferred embodiment of the present invention allows one to minimize overall system down-time.

An important advantage of the invention is further the support of a plurality of very different platforms in a hierarchical system architecture which forms the basis of integrated management of platform capabilities in the sense outlined above, further irrespective of the functionality of each such programmable platform. Further, irrespective of the type of the programmable platform, according to the present invention, details of the programmable platforms are abstracted to the outside. Further, depending on the type of platform components to be reconfigured, not all platforms, e.g., not the complete system, need to be re-started, but only selected platforms where platform components requiring a re-start of these programmable platforms are to be reconfigured.

According to a preferred embodiment of the present invention at least one platform component having as reconfiguration characteristic reconfiguration without re-start of the corresponding programmable platform is reconfigured through installation of at least one new platform component as appropriate for reconfiguration.

Therefore, according to this preferred embodiment of the present invention, there is supported not only a 1:1 substitution process for a platform component, but also a reconfiguration of a pre-existing platform component through, e.g., a plurality of new different components for extension of service capabilities. In other words, this approach supports modularity and therefore improved integrated management of the overall system architecture.

According to another preferred embodiment of the present invention at least one platform component having as reconfiguration characteristic platform reconfiguration with re-start of the corresponding programmable platform is reconfigured through stopping at least one platform component which has to be reconfigured and installing at least one related new platform component as appropriate for reconfiguration.

An important advantage of this preferred embodiment of the present invention is again that a pre-existing platform component may be substituted through a plurality of new platform components as appropriate, so as to support modularity and integrated management, of system architecture as outlined above. Yet another advantage is that the stopping of platform components is only triggered at the actual time of reconfiguration so as to further minimize overall service interruption and system down-time.

According to another preferred embodiment of the present invention there is stopped at least one platform component which must not be reconfigured but uses at least one platform component to be reconfigured and having as platform reconfiguration characteristic reconfiguration with re-start of the corresponding programmable platform.

An important advantage of this preferred embodiment of the present invention is, again in view of integrated management of an hierarchical system architecture, the full consideration of independencies and constraints between different platform components on different hierarchy levels in the system architecture. This applies even if such platform components do not form part of the overall reconfiguration process. This simultaneous and global view on reconfiguration across different hierarchy levels in the system architecture avoids an uncoordinated interruption of services relying on platform components that have to be reconfigured.

According to another preferred embodiment of the present invention the mobile communication system architecture before reconfiguration is re-established when the reconfiguration process is not successful.

An important advantage of this preferred embodiment of the present invention is that even when the reconfiguration process should not be successful, there is provided a fallback mechanism to re-establish the system architecture before reconfiguration so as to maintain provision of services to the end user of the system.

According to another preferred embodiment of the present invention new platform components are started in appropriate order when the reconfiguration process is successful.

An important advantage of this preferred embodiment of the present invention is that, assuming that the reconfiguration process is successful, there is imposed an appropriate order on the start of different reconfigured platform components. One such typical example would be the start of platform components that do not require a re-start of the related programmable platform, succeeded by those reconfigured platform components necessitating a re-start of the related programmable platforms. As outlined above, this allows to minimize service interruption to maintain system availability to the maximum extent.

According to another preferred embodiment of the present invention reconfiguration related information may be exchanged with an user of the mobile communication system.

This preferred embodiment of the present invention particularly supports integration of the user into the reconfiguration process. A first such example could be the indication of service interruption to the end user having the reconfiguration process. A second such example could be the request for commands, e.g., triggering of the reconfiguration process, by the end user.

According to another preferred embodiment of the present invention reconfiguration related information may be forwarded by an operator of the mobile communication system.

An important advantage of this preferred embodiment of the present invention is the support of a remote reconfiguration process through the operator. Typical examples heretofore could be the reconfiguration of system architecture in, e.g., a mobile terminal of a mobile communication system or any other system component thereof. The flexibility of remote reconfiguration allows for a continued on-going improvement of service provision within the overall system architecture.

According to another preferred embodiment of the present invention the reconfiguration related information is selected from a group comprising control information for the reconfiguration process, at least one platform component to be reconfigured, information on platform capabilities, and information on dependencies between platform components.

This preferred embodiment of the present is particularly suited and supporting integrated management of platform capabilities. The reason for this is that not only platform components as such may be reconfigured, but also related control parameters. Further support of the reconfiguration process is achieved through provision of information on platform capabilities in the sense outlined above and information on dependencies between related platform components.

According to another preferred embodiment of the present invention platform components are selected from a group comprising program module components, program parameters components, signalling protocol components, and service interface components for an application supporting programmable platform.

According to another preferred embodiment of the present invention there is provided a computer program product directly loadable into the internal memory of reconfiguration agent comprising software code portions for performing the inventive reconfiguration process when the product is run on a processor of the reconfiguration agent.

Therefore, the present invention is also provided to achieve an implementation of the inventive method steps on computer or processor systems. In conclusion, such implementation leads to the provision of computer program products for use with a computer system or more specifically a processor comprised in e.g., a reconfiguration agent.

This program defining the functions of the present invention can be delivered to a computer/processor in many forms, including, but not limited to information permanently stored on non-writable storage media, e.g., read only memory devices such as ROM or CD ROM discs readable by processors or computer I/O attachments; information stored on writable storage media, i.e. floppy discs and harddrives; or information convey to a computer/processor through communication media such as network and/or Internet and/or telephone networks via modems or other interface devices. It should be understood that such media, when carrying processor readable instructions implementing the inventive concept represent alternate embodiments of the present invention.

### DESCRIPTION OF DRAWING

In the following, preferred embodiments of the present invention will be explained with reference to the drawing, in which:
- Fig. 1: shows a programmable platform with its base and platform components according to the present invention;
- Fig. 2: shows a model of a hierarchical system architecture using a plurality of programmable platforms as shown in Fig. 1 and a reconfiguration agent according to the present invention;
- Fig. 3: shows a schematic diagram of the reconfiguration agent shown in Fig. 2;
- Fig. 4: shows a basic flowchart of operation of the configuration agent shown in Fig. 3;
- Fig. 5: shows a further detailed schematic diagram of the component installation unit shown in Fig. 2;
- Fig. 6: shows a further detailed flowchart of operation of the configuration agent according to the present invention; and
- Fig. 7: shows an example of the reconfiguration process according to the present invention being related to hand-over services in the mobile communication system.

### DESCRIPTION OF PREFERRED EMBODIMENTS

In the following, preferred embodiments of the present invention and related advantages and modifications will be explained with reference to the drawing. Hereby, those parts being identical in different parts of the drawing will be denoted using the same reference numerals.

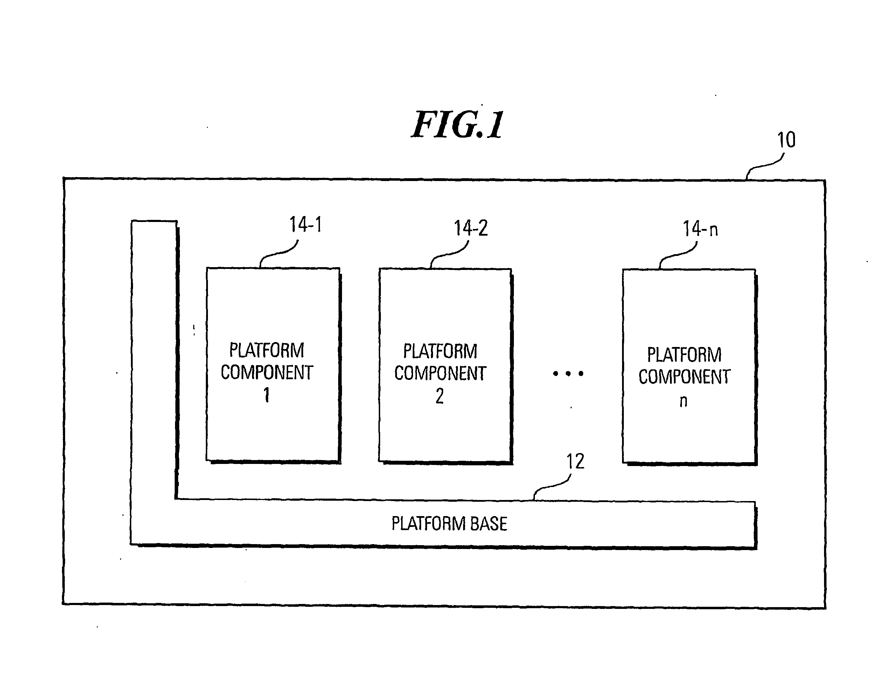

Fig. 1 shows a schematic diagram of a programmable platform 10 having a base unit 12 and reconfigurable platform components 14-1, ..., 14-n according to the present invention.

The programmable platform shown in Fig. 1 forms one abstraction layer in a hierarchical system architecture to be explained in more detail in the following for the provision of a pre-defined computational behaviour.

As shown in Fig. 1, each programmable platform 10 consists of a platform base 12, of which the functionality remains unchanged, and several platform components 14-1, ..., 14-n, which may be reconfigured, i.e. added or removed, to address different computational requirements at different points in time.

The concept of programmable platform shown in Fig. 1 is an abstraction of reconfigurable entities, either hardware or software. In view of this, the concept of reconfigurability according to the present invention is broad in order to cover all system architecture aspects from reconfigurable parameters to reconfigurable applications in compliance with the computation of the behaviour of each programmable platform.

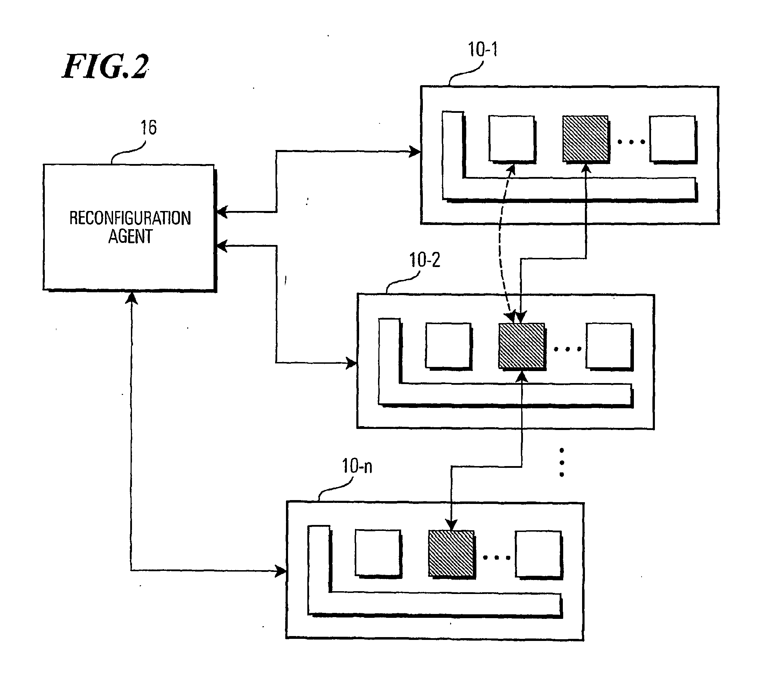

Fig. 2 shows a model of a hierarchical system architecture using a plurality of programmable platforms as shown in Fig. 1.

As shown in Fig. 2, according to the present invention there is considered an abstract system architecture, e.g., for a mobile communication system, ranging from lower layer transmission mechanisms achieved by a programmable platform 10-n to applications visible to the end user achieved by programmable platform 10-1.

In other words, the system architecture shown in Fig. 2 is abstracted into abstraction layers encompassing, e.g., transmission, networking, middleware, service support, etc. According to the present invention it is assumed that at least on one abstraction level a programmable platform is configurable with platform components.

As also shown in Fig. 2, the different programmable platforms 10-1, ..., 10-n interoperate with a reconfiguration agent 16, which is provided for reconfiguring the hierarchy of programmable platforms 10-1, ..., 10-n, as will be explained in more detail in the following.

Heretofore, and without limiting scope of invention, one may assume that such a reconfiguration is related to a service update and necessitates the free configuration of a plurality of platform components on different levels of hierarchy in the system architecture.

Further, in the most general sense, one may assume that within the hierarchy of system architecture there also exist constraints, indicated through a broken line arrow in Fig. 2, in the sense that platform components not being involved in the reconfiguration process, nevertheless, rely on further platform components which have to be reconfigured. In the overall framework of the present invention, such a constellation will have to be considered for optimised service provision to the end user.

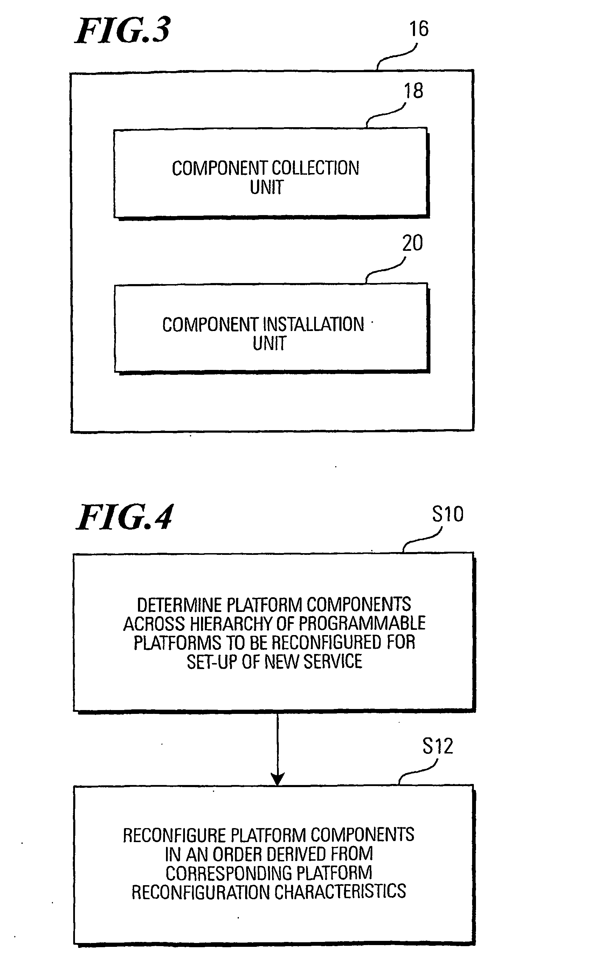

In the following, further details and aspects of the reconfiguration agent 16 shown in Fig. 2 will be explained with reference to Figs. 3 to 6.

Fig. 3 shows a schematic diagram of the reconfiguration agent shown in Fig. 2. As shown in Fig. 3, the reconfiguration agent 16 divides into a component collection unit 18 and a component installation unit 20.

Fig. 4 shows a basic flowchart of operation for the configuration agent shown in Fig. 2.

As shown in Fig. 4, the component collection unit 18 is adapted to determine platform components across the hierarchy of programmable platforms 10-1, ..., 10-n to be reconfigured for set-up of a new service in a step S10. Further, operatively the component installation unit 20 shown in Fig. 3 is adapted to reconfigure platform components across the hierarchy of programmable platforms 10-1, ..., 10-n in an order derived from corresponding platform reconfiguration characteristics in a step S12.

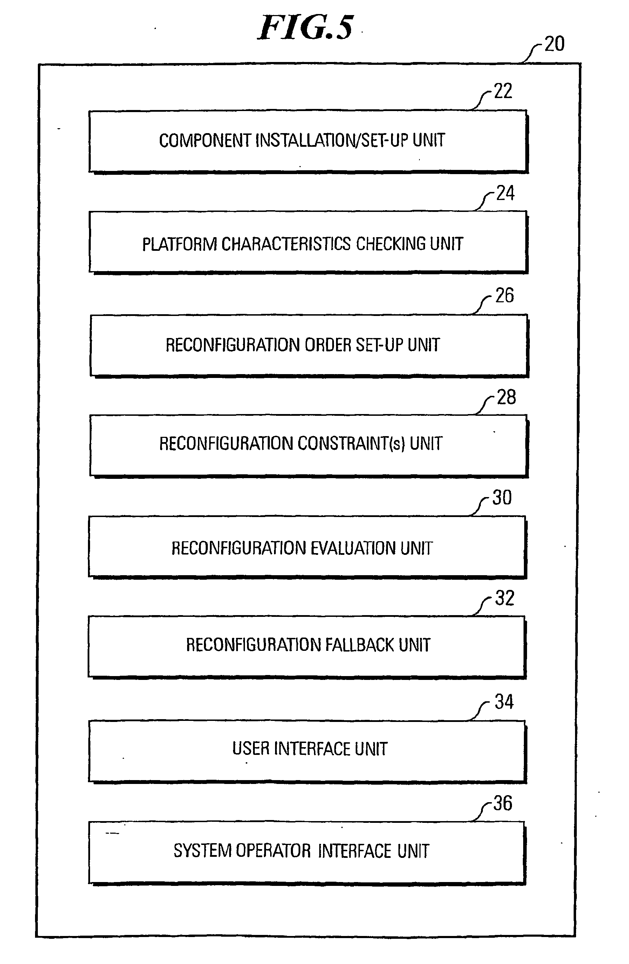

Fig. 5 shows a further detailed schematic diagram of the platform component installation unit 20 comprised by the configuration agent 16 shown in Fig. 3.

As shown in Fig. 5, the platform component installation unit 20 comprises a platform component installation/set-up unit 22, a platform characteristics checking unit 24, a reconfiguration order set-up unit 26, a reconfiguration constraint(s) unit 28, a reconfiguration evaluation unit 30, a reconfiguration fallback unit 32, a user interface unit 34, and a system operator interface unit 36.

Here, it should be noted while Fig. 5 shows different sub-units of the component installation unit 20, the present invention also covers any sub-combination of the sub-units shown in Fig. 5 as long as the necessary basic reconfiguration functionality explained in the following is maintained.

Operatively, the component installation/set-up unit 22 achieves the actual installation of the platform components that have to be reconfigured in the different programmable platforms as shown in Fig. 2. This operation may relate to the installation of new hardware components/program module components on different programmable platforms, further program parameter components, signalling protocol components, and service interface components depending on the level of hierarchy in the system architecture shown in Fig. 2.

Further, operatively the platform characteristics checking unit 24 is adapted to determine platform reconfiguration characteristics before reconfiguration of platform components. Typically, the result of such an operation will be the classification of reconfiguration characteristics either into the type without re-start of corresponding programmable platform after related platform component configuration or the type with re-start of the corresponding programmable platform after configuration of related platform components.

Here, it should be noted that the platform characteristics checking unit 24 is adapted for inter-operation with any type of programmable platform, e.g., a network interface platform for adaptation to physical layer protocols and for triggering events on higher level programmable platforms, a forwarding agent platform for connecting network interface platforms, a protocol computing platform for processing stateful protocols, and/or a middleware platform for de-coupling user application from characteristics and specifics of lower level programmable platforms.

Further, operatively the reconfiguration order set-up unit 26 is adapted to determine the order how platform components will be reconfigured across the hierarchy of programmable platforms. Basically, this order divides into a first group of platform components lying in programmable platforms that do not require re-start after reconfiguration. The order will then be supplemented by platform components lying in programmable platforms that require a re-start after reconfiguration. It should be clear that different platform components are accommodated in the order for reconfiguration only as far as such platform components have actually to be reconfigured.

Depending on the type of result achieved by the reconfiguration order set-up unit 26, the component installation set-unit 22 shown in Fig. 5 will operate in two different modes.

One first mode relates to the reconfiguration of platform components without re-start of corresponding programmable platforms after reconfiguration. In this case, the component installation/set-up unit 22 will direcly install the new platform component without interruption of ongoing services. It should be noted that the component installation/set-up unit 22 operatively is also adapted to provide a plurality of platform components for substitution of a single previous platform component depending on the type of service extension to be achieved by the reconfiguration.

A second mode of operation of the component installation/set-up unit 22 relates to the reconfiguration of platform components requiring a re-start of the corresponding programmable platform after reconfiguration. Here, the component installation/set-up unit 22 operatively stops at least one platform component which has to be reconfigured and only after stopping the platform component installs at least one related new platform component as appropriate for reconfiguration.

Further, the reconfiguration constraint(s) unit 28 shown in Fig. 5 is adapted to stop at least one platform component that must not be reconfigured but uses at least one platform component to be reconfigured and has a platform reconfiguration characteristic requiring a re-start of the corresponding programmable platform.

In other words, operatively the reconfiguration constraint(s) unit 28 evaluates the interdependency of different platform components in the hierarchical architecture shown in Fig. 2 to avoid malfunctioning of services using platform components that are not to be reconfigured, but rely on platform components forming part of the reconfiguration process.

Further, operatively the reconfiguration evaluation unit 30 is adapted to evaluate success of the reconfiguration process.

Further, operatively the reconfiguration fallback unit 32 is adapted to re-establish the mobile communication architecture before start of the reconfiguration process when the result of reconfiguration as indicated by the reconfiguration evaluation unit 30 is not successful. Heretofore, it may be assumed that the state of the mobile communication system architecture is maintained in a memory, not shown in Fig. 5, of the reconfiguration agent as basis for such re-establishment of such system architecture.

Further, in case the reconfiguration evaluation unit 30 indicates a positive result of the reconfiguration process, the component installation/set-up unit 22 is adapted to start the reconfigured new platform components in an appropriate order, e.g., from lower levels of system architecture towards higher levels of system architecture for start of the established new service(s) in a bottom-up manner over the different levels of hierarchy in the system architecture. Another example of such an appropriate order would be that a platform component using a reconfigured interface component would only be start after start of the interface component.

Further, operatively the user interface unit 34 is adapted to exchange reconfiguration-related information with an end user of the overall system. Therefore, the user interface unit 34 may be used either for indication of a reconfiguration state to the end user or for reception of control or command information from the end user. In the latter case, the end user may gain control over the overall reconfiguration process.

Further, operatively the system operator interface unit 36 allows for exchange of reconfiguration-related information with an operator of the overall system. Typical examples of such information are control information for the reconfiguration process, at least one platform component to be reconfigured, information on platform capabilities, and information on dependencies between different platform components.

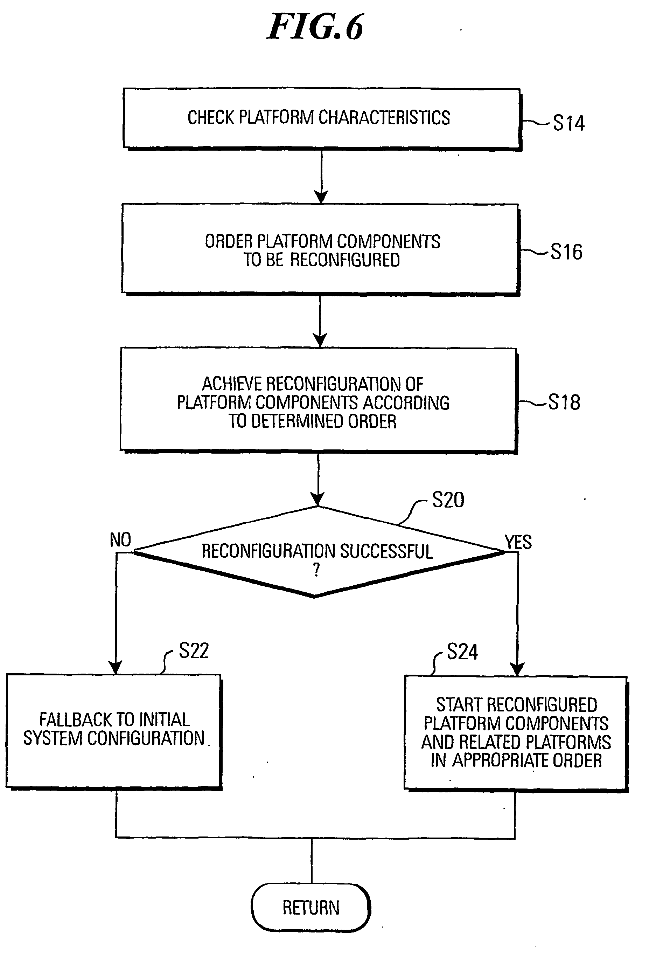

Fig. 6 shows a flowchart indicating the interrelationship between the operations of the different sub-units of the component installation unit 20 shown in Fig. 5.

As shown in Fig. 6, initially the platform characteristics checking unit 24 will determine different platform characteristics involved in the reconfiguration process in a step S14.

Then, the reconfiguration order set-up unit 26 will determine the order for platform component reconfiguration in the sense outlined above in step S16.

Then, the component installation/set-up unit 22 will achieve the actual reconfiguration of platform components according to the determined order in step S18.

Then, the reconfiguration evaluation unit 30 will determine the success of evaluation in a step S20. When the reconfiguration was not successful, the reconfiguration fallback unit 32 will achieve fallback to the initial system architecture in a step S22. Otherwise, when the reconfiguration was successful, the component installation/set-up unit will start reconfigured platform components and related platforms in an appropriate order, e.g., in a bottom-up manner as explained above, in a step S24.

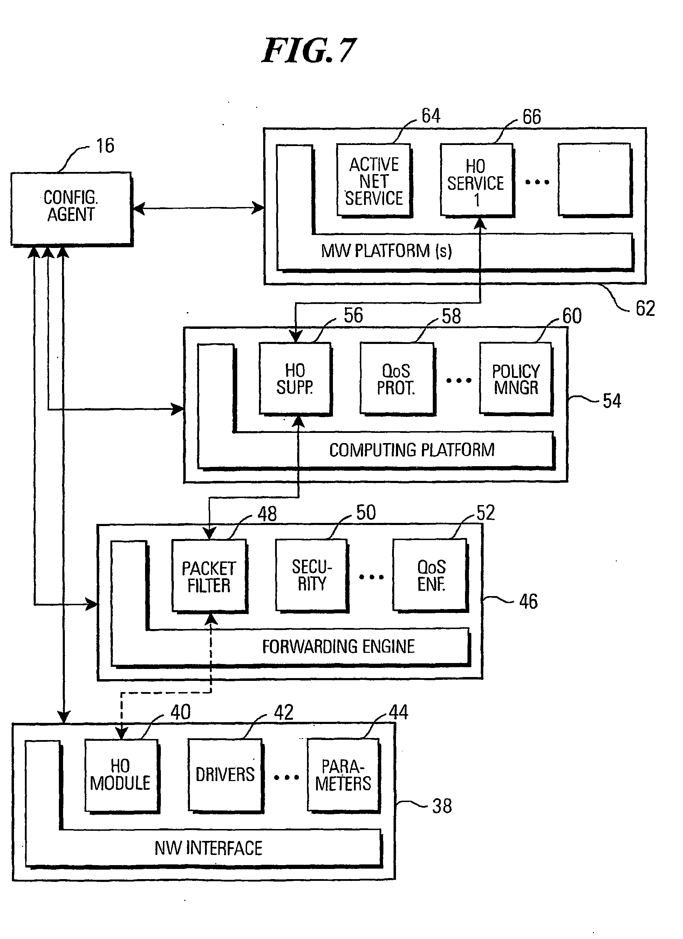

While above general aspects of the present invention regarding reconfiguration of a hierarchical system architecture have been explained with respect to Figs. 1 to 6, in the following a more specific example of the application of the present invention will be given with respect to a mobile communication system and with reference to Fig. 7. In particular, the example relates to a reconfiguration of a handover service in such a mobile communication system.

The particular system architecture shown in Fig. 7 relies on four programmable platforms. A first such platform is a network interface platform 38 being medium-specific for different wireless or wired communication standards. The network interface platform 38 may be configured or programmed to adapt to new physical layer protocols or for triggering events on higher layers. It should be noted that any type of physical layer protocol should well be covered by the present invention.

As shown in Fig. 7 it is assumed that the network interface platform 38 comprises at least a handover component 40, a plurality of driver components 42, and at least a memory component 44 for the handling of different network interface parameters.

As shown in Fig. 7, on top of the network interface platform 38 there is provided a forwarding engine platform 46 as data path of a network node and connecting different network interface platforms, e.g., by a switch matrix. The forwarding engine platform 46 may be implemented either as dedicated hardware or as a kernel module of common operating systems.

Further, the forwarding engine platform 46 comprises at least a packet filter component 48 achieving filtering of signalling specific packets carrying information which is necessary for the operation of the forwarding engine platform, further a security-related programmable component 50, and a quality of service QoS component 52. The forwarding engine 46 platform is programmable for performance critical tasks which are performed on a packet basis.

As shown in Fig. 7, on top of the forwarding engine platform 46 there is provided a computing platform 54 serving as general purpose platform for processing stateful protocols, e.g., routing, QoS signalling or connection management. The computing platform comprises at least a handover support component 56, a QoS protocol component 58, and a connection management policy management component 60.

As shown in Fig. 7, on top of the computing platform 54 there is provided a middleware platform 62 that is adapted to de-couple middleware components and services/applications from characteristics and specifics of traditional functions implemented in the lower hierarchies of system architecture, i.e., in the network nodes and/or switches.

In other words, the middleware platform 62 provides an abstraction for interaction between different system parts residing either on different or on the same system device and also session semantics, i.e. information on relation between different services/applications on the application level.

As shown in Fig. 7, the middleware platform 62 comprises at least an active net service component 64 and a handover service component 66.

For the example outlined so far it may be assumed that for a handover service update the following platforms components have to be modified: the handover component 40 in the network interface platform 38, the packet filter component 48 in the forwarding engine platform 46, the handover support component 56 in the computing platform 54, and the handover service component 56 in the computing platform 54, and the handover service component 66 in the middleware platform 62.

In view of this, the new handover procedure will be configured in the following way:
Initially, a layer 1 and 2 handover implementation will be achieved in the handover component 40. Here, for the reconfiguration, the network interface platform 38 has to be stopped.

Then, new parameters will be installed in the forwarding engine platform 46, in particular in the packet filtering component 48 to give support on the forwarding engine platform for filtering the new handover signalling packets. This may be achieved without stopping the forwarding engine platform 46.

Then, in the computing platform 54, support for the new signalling protocol will be achieved through exchange of the handover protocol in the handover support component 56. Due to this reconfiguration, the handover protocol will be unavailable for some time.

Finally, on the middleware platform 72 then a new service component 66 for the handover application interface will be installed, which installation does not require any service interruption.

From the above and in view of the general outline given above it should be clear that those components not requiring a stopping of service will be reconfigured first, i.e. the platform components on the forwarding engine platform 46 and the middleware platform 62. Hereafter, related platform components will be reconfigured on the network interface platform 38 and the computing platform 54, according to the ordering explained in a more general sense above.

While above different aspects of the present invention have been explained with reference to the drawing, it should be clear that the reconfiguration according to the present invention is well applicable within different system architectures, e.g., a mobile terminal in a mobile communication system, a switch in a mobile communication system, etc. Further, the application of the present invention is not restricted to any particular type of hierarchical system architecture or related platform functionality.

## Claims

1. Method of reconfiguring a hierarchy of programmable platforms establishing a mobile communication system architecture, wherein programmable platforms are selected from a group comprising a network interface platform for adaptation to physical layer protocols and for triggering events on higher level programmable platforms, a forwarding engine platform for connecting network interface platforms, a protocol computing platform for processing stateful protocols, and a middleware platform for decoupling user applications from characteristics and specifics of lower-level programmable platforms, comprising the steps:
- determining (S10) platform components across the hierarchy of programmable platforms to be reconfigured for set-up of a new service in the mobile communication system;
- reconfiguring platform components (S12) across the hierarchy of programmable platforms in an order derived from corresponding platform reconfiguration characteristics; wherein
- platform reconfiguration characteristics are determined before reconfiguration of platform components according to reconfiguration without re-start of the corresponding programmable platform or reconfiguration with re-start of the corresponding programmable platform; and
- the order of platform components to be reconfigured across the hierarchy of programmable platforms is determined (S16) to
- at least one platform component having as platform reconfiguration characteristic reconfiguration without re-start of the corresponding programmable platform, as far as such a platform component has to be reconfigured; followed by
- at least one platform component having as platform reconfiguration characteristic reconfiguration with re-start of the corresponding programmable platform, as far as a platform component has to be reconfigured.

2. Method according to claim 1, ***characterized in that*** it comprises the step reconfiguring (S24) at least one platform component having as reconfiguration characteristic reconfiguration without re-start of the corresponding programmable platform through installation of at least one new platform component as appropriate for reconfiguration.

3. Method according to claim 2, **characterized in that** it further comprises the step of reconfiguring (S24) at least one platform component having as reconfiguration characteristic platform reconfiguration with re-start of the corresponding programmable platform according to the following sub-steps:
- stopping at least one platform component which has to be reconfigured; and
- installing at least one related new platform component as appropriate for reconfiguration.

4. Method according to claim 3, ***characterized* in that** it further comprises the step of stopping at least one platform component which need not be reconfigured, but uses at least one platform component to be reconfigured and having as platform reconfiguration characteristic reconfiguration with re-start of the corresponding programmable platform.

5. Method according to one of the claims 1 to 4, ***characterized* in that** it further comprises the step of exchanging reconfiguration related information with a user of the mobile communication system or with an operator of the mobile communication system.

6. Method according to claim 5, **characterized in that** the reconfiguration related information is selected from a group comprising control information for the reconfiguration process, at least one platform component (40-66) to be reconfigured, information on platform capabilities, and information on dependencies between platform components.

7. Method according to one of the claims 1 to 6, **characterized in that** platform components are selected from a group comprising program module components, program parameter components, signalling protocol components, and service interface components for an application supporting programmable platform.

8. Reconfiguration agent (16) for reconfiguring a hierarchy of programmable platforms establishing a mobile communication system architecture, and being adapted to operate with programmable platforms selected from a group comprising a network interface platform for adaptation to physical layer protocols and for triggering events on higher level programmable platforms, a forwarding engine platform for connecting network interface platforms, a protocol computing platform for processing stateful protocols, and a middleware platform for decoupling user applications from characteristics and specifics of lower-level programmable platforms, comprising:
- a component collection unit (18) adapted to determine platform components across the hierarchy of programmable platforms to be reconfigured for set-up of a new service in the mobile communication system;
- a component installation unit (22) adapted to reconfigure platform components across the hierarchy of programmable platforms in an order derived from corresponding platform reconfiguration characteristics **characterised by**
- a platform characteristics checking unit (24) adapted to check platform characteristics before reconfiguration of platform components according to reconfiguration without re-start of the corresponding programmable platform or reconfiguration with re-start of the corresponding programmable platform; and
- an ordering unit (26) adapted to determine the order of platform components to be reconfigured across the hierarchy of programmable platforms according to
- at least one platform component having as platform reconfiguration characteristic reconfiguration without re-start of the corresponding programmable platform, as far as such a platform component has to be reconfigured; followed by
- at least one platform component having as platform reconfiguration characteristic reconfiguration with re-start of the corresponding programmable platform, as far as such a platform component has to be reconfigured.

9. Reconfiguration agent according to claim 8, ***characterized in that*** the installation unit (22) is adapted to reconfigure at least one platform component having as reconfiguration characteristic reconfiguration without re-start of the corresponding programmable platform through installation of at least one new platform component as appropriate for reconfiguration.

10. Reconfiguration agent according to claim 9, ***characterized in that*** the installation unit (22) is further adapted to reconfigure at least one platform component having as reconfiguration characteristic platform reconfiguration with re-start of the corresponding programmable platform through:
- stopping at least one platform component which has to be reconfigured; and
- installing at least one related new platform component as appropriate for reconfiguration.

11. Reconfiguration agent according to claim 10, **characterized in that** it further comprises a reconfiguration constraint unit (28) adapted to stop at least one platform component which need not be reconfigured, but uses at least one platform component to be reconfigured and having as platform reconfiguration characteristic reconfiguration with re-start of the corresponding programmable platform.

12. Reconfiguration agent according to one of the claims 8 to 11, **characterized in that** it further comprises a user interface (34) adapted to exchange of reconfiguration related information with a user of the mobile communication system and/or an operator interface adapted to exchange reconfiguration related information with an operator of the mobile communication system.

13. Reconfiguration agent according to claim 12, **characterized in that** the reconfiguration related information is selected from a group comprising control information for the reconfiguration process, at least one platform component to be reconfigured, information on platform capabilities, and information on dependencies between platform components.

14. Reconfiguration agent according to one of the claims 8 to 13, **characterized in that** it is adapted to reconfigure platform components selected from a group comprising program module components, program parameters components, signalling protocol components, and service interface components for an application supporting programmable platform.

15. Computer program product directly loadable into the internal memory of a reconfiguration agent, comprising software code portions for performing the steps of one of the claims 1 to 7, when the product is run on a processor of the reconfiguration agent (16).

## Patentansprüche

1. Verfahren eines Rekonfigurierens einer Hierarchie von programmierbaren Plattformen, die eine Mobilkommunikationssystemarchitektur erstellen, wobei programmierbare Plattformen aus einer Gruppe ausgewählt sind, umfassend eine Netzwerkschnittstellenplattform zur Adaption an Protokolle einer physikalischen Schicht und zum Triggern von Vorgängen auf programmierbaren Plattformen einer höheren Ebene, sowie eine Weiterleit-Engine-Plattform zum Verbinden von Netzwerkschnittstellenplattformen, eine Protokollberechenplattform zum Verarbeiten von Stateful-Protokollen und eine Middleware-Plattform zum Entkoppeln von Benutzeranwendungen von Charakteristiken und Spezifika von programmierbaren Plattformen einer niederen Ebene, umfassend die Schritte:
- Bestimmen (S10) von Plattformkomponenten über die Hierarchie der programmierbaren Plattformen, die zu rekonfigurieren sind, zum Aufbau eines neuen Dienstes in dem Mobilkommunikationssystem;
- Rekonfigurieren von Plattformkomponenten (S12) über die Hierarchie der programmierbaren Plattformen in einer Anordnung, die von entsprechenden Plattformrekonfigurationscharakteristika abgeleitet wird; wobei
- Plattformrekonfigurationscharakteristika bestimmte werden vor einer Rekonfiguration der Plattformkomponenten gemäß der Rekonfiguration ohne einen Neustart der entsprechenden programmierbaren Plattform oder Rekonfiguration mit Neustart der entsprechenden programmierbaren Plattform; und
- die Anordnung der zu rekonfigurierenden Plattformkomponenten über die Hierarchie der programmierbaren Plattformen bestimmt wird (S16) auf
- mindestens eine Plattformkomponente, die als Plattformrekonfigurationscharakteristik eine Rekonfiguration ohne Neustart der entsprechenden programmierbaren Plattform aufweist, soweit solch eine Plattformkomponente rekonfiguriert werden muss; gefolgt durch
- mindestens eine Plattformkomponente, die als Plattformrekonfigurationscharakteristik eine Rekonfiguration mit Neustart der entsprechenden programmierbaren Plattform aufweist, soweit eine Plattformkomponente rekonfiguriert werden muss.

2. Verfahren nach Anspruch 1, **dadurch gekennzeichnet, dass** es den Schritt umfasst: Rekonfigurieren (S24) von mindestens einer Plattformkomponente, die als Rekonfigurationscharakteristik eine Rekonfiguration ohne Neustart der entsprechenden programmierbaren Plattform aufweist, durch Installation von mindestens einer neuen Plattformkomponente, wie es passend ist für eine Rekonfiguration.

3. Verfahren nach Anspruch 2, **dadurch gekennzeichnet, dass** es ferner den Schritt umfasst: Rekonfigurieren (S24) von mindestens einer Plattformkomponente, die als Rekonfigurationscharakteristik eine Plattformrekonfiguration mit Neustart der entsprechenden programmierbaren Plattform nach den folgenden Unterschritten aufweist:
- Anhalten von mindestens einer Plattformkomponente, die rekonfiguriert werden muss; und
- Installieren von mindestens einer verwandten neuen Plattformkomponente, wie es passend ist für die Rekonfiguration.

4. Verfahren nach Anspruch 3, **dadurch gekennzeichnet, dass** es ferner den Schritt umfasst: Stoppen von mindestens einer Plattformkomponente, die nicht rekonfiguriert werden muss, aber mindestens eine zu rekonfigurierende Plattformkomponente verwendet, und als Plattformrekonfigurationscharakteristik eine Rekonfiguration mit Neustart der entsprechenden programmierbaren Plattform aufweist.

5. Verfahren nach einem der Ansprüche 1 bis 4, **dadurch gekennzeichnet, dass** es ferner den Schritt umfasst: Austauschen von rekonfigurationsverwandter Information mit einem Benutzer des Mobilkommunikationssystems oder mit einem Betreiber des Mobilkommunikationssystems.

6. Verfahren nach Anspruch 5, **dadurch gekennzeichnet, dass** die rekonfigurationsverwandte Information ausgewählt wird von einer Gruppe, umfassend Steuerinformation für den Rekonfigurationsprozess, mindestens eine zu rekonfigurierende Plattformkomponente (40-66), Information bezüglich Plattformfähigkeiten und Information bezüglich Abhängigkeiten zwischen Plattformkomponenten.

7. Verfahren nach einem der Ansprüche 1 bis 6, **dadurch gekennzeichnet, dass** Plattformkomponenten ausgewählt werden aus einer Gruppe umfassend Programmmodulkomponenten, Programmparameterkomponenten, Signalisierprotokollkomponenten und Dienstschnittstellenkomponenten für eine Anwendung, die eine programmierbare Plattform unterstützt.

8. Einen Rekonfigurierations-Agent (16) zum Rekonfigurieren einer Hierarchie von programmierbaren Plattformen, die eine Mobilkommunikationssystemarchitektur erstellen, und ausgebildet sind zum Arbeiten mit programmierbaren Plattformen, die aus einer Gruppe ausgewählt werden, umfassend eine Netzwerkschnittstellenplattform zur Adaption an Protokolle einer physikalischen Schicht und zum Triggern von Vorgängen auf programmierbaren Plattformen einer höheren Schicht, sowie eine Weiterleit-Engine-Plattform zum Verbinden von Netzwerkschnittstellenplattformen, eine Protokollberechenplattform zum Verarbeiten von Stateful-Protokollen und eine Middleware-Plattform zum Entkoppeln von Benutzeranwendungen von Charakteristika und Spezifika von programmierbaren Plattformen einer niederen Schicht, umfassend:
- eine Komponentensammeleinheit (18), ausgebildet zum Bestimmen von Plattformkomponenten über die Hierarchie der programmierbaren Plattformen, die zu rekonfigurieren sind zum Aufbauen eines neuen Dienstes in dem Mobilkommunikationssystem;
- eine Komponenteninstallationseinheit (22), ausgebildet zum Rekonfigurieren von Plattformkomponenten über die Hierarchie der programmierbaren Plattformen in einer Anordnung, die von entsprechenden Plattformrekonfigurationscharakteristika abgeleitet wird;
**gekennzeichnet durch**
- eine Plattformcharakteristikaüberprüfeinheit (24), ausgebildet zum Überprüfen von Plattformcharakteristika vor einer Rekonfiguration der Plattformkomponenten gemäß einer Rekonfiguration ohne Neustart der entsprechenden programmierbaren Plattform oder Rekonfiguration mit Neustart der entsprechenden programmierbaren Plattform; und
- eine Anordnungseinheit (26), ausgebildet zum Bestimmen der Anordnung der Plattformkomponenten, die zu rekonfigurieren sind, über die Hierarchie der programmierbaren Plattformen gemäß
- mindestens einer Plattformkomponente, die als Plattformrekonfigurationscharakteristik eine Rekonfiguration ohne Neustart der entsprechenden programmierbaren Plattform aufweist, soweit solch eine Plattformkomponente rekonfiguriert werden muss; gefolgt **durch**
- mindestens einer Plattformkomponente, die als Plattformrekonfigurationscharakteristik eine Rekonfiguration mit Neustart der entsprechenden programmierbaren Plattform aufweist, soweit solch eine Plattformkomponente rekonfiguriert werden muss.

9. Rekonfigurations-Agent nach Anspruch 8, **dadurch gekennzeichnet, dass** die Installationseinheit (22) ausgebildet ist zum Rekonfigurieren von mindestens einer Plattformkomponente, die als Rekonfigurationscharakteristik eine Rekonfiguration ohne Neustart der entsprechenden programmierbaren Plattform aufweist, durch Installation von mindestens einer neuen Plattformkomponente, wie es passend für die Rekonfiguration ist.

10. Rekonfigurations-Agent nach Anspruch 9, **dadurch gekennzeichnet, dass** die Installationseinheit (22) weiterhin ausgebildet ist, zum Rekonfigurieren von mindestens einer Plattformkomponente, die als Rekonfigurationscharakteristik eine Plattformrekonfiguration mit Neustart der entsprechenden programmierbaren Plattform aufweist, durch:
- Anhalten von mindestens einer Plattformkomponente, die rekonfiguriert werden muss; und
- Installieren von mindestens einer verwandten neuen Plattformkomponente, wie es für die Rekonfiguration passend ist.

11. Rekonfigurations-Agent nach Anspruch 10, **dadurch gekennzeichnet, dass** er ferner eine Rekonfigurationsbedingungseinheit (28) umfasst, die ausgebildet ist, zum Anhalten von mindestens einer Plattformkomponente, die nicht rekonfiguriert werden muss, aber mindestens eine zu rekonfigurierende Plattformkomponente verwendet, und als Plattformrekonfigurationscharakteristik eine Rekonfiguration mit Neustart der entsprechenden programmierbaren Plattform aufweist.

12. Rekonfigurations-Agent nach einem der Ansprüche 8 bis 11, **dadurch gekennzeichnet, dass** er ferner eine Benutzerschnittstelle (34) umfasst, ausgebildet zum Austauschen von rekonfigurationsverwandter Information mit einem Benutzer des Mobilkommunikationssystems und/oder einer Betreiberschnittstelle ausgebildet zum Austauschen von rekonfigurationsverwandter Information mit einem Betreiber des Mobilkommunikationssystems.

13. Rekonfigurations-Agent nach Anspruch 12, **dadurch gekennzeichnet, dass** die rekonfigurationsverwandte Information ausgewählt wird von einer Gruppe umfassend Steuerinformation für den Rekonfigurationsprozess, mindestens einer zu rekonfigurierenden Plattformkomponente, Information bezüglich Plattformfähigkeiten und Information bezüglich Abhängigkeiten zwischen Plattformkomponenten.

14. Rekonfigurations-Agent nach einem der Ansprüche 8 bis 13, **dadurch gekennzeichnet, dass** er ausgebildet ist zum Rekonfigurieren von Plattformkomponenten, die aus einer Gruppe ausgewählt werden, umfassend Programmmodulkomponenten, Programmparameterkomponenten, Signalisierprotokollkomponenten und Dienstschnittstellenkomponenten für eine Anwendung, die eine programmierbare Plattform unterstützt.

15. Computerprogrammprodukt, das direkt in den internen Speicher eines Rekonfigurations-Agents ladbar ist, umfassend Software-Codeteile zum Ausführen der Schritte von einem der Ansprüche 1 bis 7, wenn das Produkt auf einem Prozessor des Rekonfigurations-Agents (16) läuft.

## Revendications

1. Procédé de reconfiguration d'une hiérarchie de plates-formes programmables, constituant une architecture de système de communication mobile, dans lequel des plates-formes programmables sont sélectionnées à partir d'un groupe comprenant une plate-forme d'interface réseau pour une adaptation à des protocoles de couches physiques et pour déclencher des événements sur des plates-formes programmables de niveau supérieur, une plate-forme de moteur d'acheminement pour relier des plates-formes d'interface réseau, une plate-forme de calcul de protocoles pour traiter des protocoles élaborés, et une plate-forme de logiciel standard personnalisé pour découpler des applications utilisateur de caractéristiques et d'aspects spécifiques de plates-formes programmables de niveau inférieur, le procédé comprenant les étapes consistant à :
- déterminer (S10) des composants de plates-formes sur toute la hiérarchie de plates-formes programmables, à reconfigurer pour la mise en place d'un nouveau service dans le système de communication mobile ;
- reconfigurer des composants de plates-formes (S12) sur toute la hiérarchie de plates-formes programmables, dans un ordre obtenu à partir de caractéristiques de reconfiguration de plates-formes correspondantes ; dans lequel
- les caractéristiques de reconfiguration de plates-formes sont déterminées avant la reconfiguration des composants de plates-formes, selon une reconfiguration sans la remise en marche de la plate-forme programmable correspondante, ou selon une configuration avec la remise en marche de la plate-forme programmable correspondante ; et
- l'ordre des composants de plates-formes à reconfigurer sur toute la hiérarchie de plates-formes programmables, est déterminé (S16) pour
- au moins un composant de plate-forme ayant, en tant que caractéristique de reconfiguration de plate-forme, une reconfiguration sans remise en marche de la plate-forme programmable correspondante, dans la mesure où un tel composant de plate-forme doit être reconfiguré, suivi
- d'au moins un composant de plate-forme ayant, en tant que caractéristique de reconfiguration de plate-forme, une reconfiguration avec remise en marche de la plate-forme programmable correspondante, dans la mesure où un composant de plate-forme doit être reconfiguré.

2. Procédé selon la revendication 1, **caractérisé en ce qu'**il comprend l'étape consistant à reconfigurer (S24) au moins un composant de plate-forme ayant, en tant que caractéristique de reconfiguration, une reconfiguration sans remise en marche de la plate-forme programmable correspondante, par l'intermédiaire de l'installation d'au moins un nouveau composant de plate-forme, tel qu'approprié pour une reconfiguration.

3. Procédé selon la revendication 2, **caractérisé en ce qu'**il comprend en outre l'étape consistant à reconfigurer (S24) au moins un composant de plate-forme ayant, en tant que caractéristique de reconfiguration, une reconfiguration plate-forme avec remise en marche de la plate-forme programmable correspondante, selon les sous-étapes suivantes :
- arrêter au moins un composant de plate-forme, qui doit être reconfiguré ; et
- installer au moins un nouveau composant apparenté de plate-forme, tel qu'approprié pour une reconfiguration.

4. Procédé selon la revendication 3, **caractérisé en ce qu'**il comprend en outre l'étape consistant à arrêter au moins un composant de plate-forme, qui n'a pas besoin d'être reconfiguré, mais utilise au moins un composant de plate-forme à reconfigurer, et ayant, en tant que caractéristique de reconfiguration de plate-forme, une reconfiguration avec remise en marche de la plate-forme programmable correspondante.

5. Procédé selon l'une des revendications 1 à 4, **caractérisé en ce qu'**il comprend en outre l'étape consistant à échanger des informations liées à de la reconfiguration, avec un utilisateur du système de communication mobile ou avec un opérateur du système de communication mobile.

6. Procédé selon la revendication 5, **caractérisé en ce que** les informations liées à la reconfiguration sont sélectionnées à partir d'un groupe comprenant des informations de commande pour le processus de reconfiguration, au moins un composant de plate-forme (40 à 66) à reconfigurer, des informations sur des possibilités de plates-formes, et des informations sur des dépendances entre des composants de plates-formes.

7. Procédé selon l'une des revendications 1 à 6, **caractérisé en ce que** des composants de plates-formes sont sélectionnés à partir d'un groupe comprenant des composants de modules de programmes, des composants de paramètres de programmes, des composants de protocoles de signalisation, et des composants d'interfaces de service, pour une plate-forme programmable prenant en charge des applications.

8. Agent de reconfiguration (16) pour reconfigurer une hiérarchie de plates-formes programmables, constituant une architecture de système de communication mobile, et propre à fonctionner avec des plates-formes programmables sélectionnées à partir d'un groupe comprenant une plate-forme d'interface réseau pour une adaptation à des protocoles de couches physiques et pour déclencher des événements sur des plates-formes programmables de niveau supérieur, une plate-forme de moteur d'acheminement pour relier des plates-formes d'interface réseau, une plate-forme de calcul de protocoles pour traiter des protocoles élaborés, et une plate-forme de logiciel standard personnalisé pour découpler des applications utilisateur de caractéristiques et d'aspects spécifiques de plates-formes programmables de niveau inférieur, et comprenant :
- une unité de collecte de composants (18) propre à déterminer des composants de plates-formes sur toute la hiérarchie de plates-formes programmables, à reconfigurer pour la mise en place d'un nouveau service dans le système de communication mobile ;
- une unité d'installation de composants (22) propre à reconfigurer des composants de plates-formes sur toute la hiérarchie de plates-formes programmables, dans un ordre obtenu à partir de caractéristiques de reconfiguration de plates-formes correspondantes, **caractérisé par**
- une unité de vérification de caractéristiques de plates-formes (24) propre à vérifier des caractéristiques de plates-formes avant la reconfiguration de composants de plates-formes, selon une reconfiguration sans remise en marche de la plate-forme programmable correspondante, ou selon une configuration avec remise en marche de la plate-forme programmable correspondante ; et
- une unité de classement (26) propre à déterminer l'ordre de composants de plates-formes à reconfigurer, sur toute la hiérarchie de plates-formes programmables, selon
- au moins un composant de plate-forme ayant, en tant que caractéristique de reconfiguration de plate-forme, une reconfiguration sans remise en marche de la plate-forme programmable correspondante, dans la mesure où un tel composant de plate-forme doit être reconfiguré, suivi
- d'au moins un composant de plate-forme ayant, en tant que caractéristique de reconfiguration de plate-forme, une reconfiguration avec remise en marche de la plate-forme programmable correspondante, dans la mesure où un tel composant de plate-forme doit être reconfiguré.

9. Agent de reconfiguration selon la revendication 8, **caractérisé en ce que** l'unité d'installation (22) est propre à reconfigurer au moins un composant de plate-forme ayant, en tant que caractéristique de reconfiguration, une reconfiguration sans remise en marche de la plate-forme programmable correspondante, par l'intermédiaire de l'installation d'au moins un nouveau composant de plate-forme, tel qu'approprié pour une reconfiguration.

10. Agent de reconfiguration selon la revendication 9, **caractérisé en ce que** l'unité d'installation (22) est propre en outre à reconfigurer au moins un composant de plate-forme ayant, en tant que caractéristique de reconfiguration, une reconfiguration de plate-forme avec remise en marche de la plate-forme programmable correspondante, en :
- arrêtant au moins un composant de plate-forme, qui doit être reconfiguré ; et
- installant au moins un nouveau composant apparenté de plate-forme pour une reconfiguration.

11. Agent de reconfiguration selon la revendication 10, **caractérisé en ce qu'**il comprend en outre une unité de contrainte de reconfiguration (28) propre à arrêter au moins un composant de plate-forme, qui n'a pas besoin d'être reconfiguré, mais utilise au moins un composant de plate-forme à reconfigurer, et ayant, en tant que caractéristique de reconfiguration de plate-forme, une reconfiguration avec remise en marche de la plate-forme programmable correspondante.

12. Agent de reconfiguration selon l'une des revendications 8 à 11, **caractérisé en ce qu'**il comprend en outre une interface utilisateur (34) propre à échanger des informationsliées à de la reconfiguration, avec un utilisateur du système de communication mobile, et/ou une interface opérateur propre à échanger des informations liées à de la reconfiguration, avec un opérateur du système de communication mobile.

13. Agent de reconfiguration selon la revendication 12, **caractérisé en ce que** les informations liées à de la reconfiguration sont sélectionnées à partir d'un groupe comprenant des informations de commande pour le processus de reconfiguration, au moins un composant de plate-forme à reconfigurer, des informations sur les possibilités des plates-formes, et des informations sur des dépendances entre composants de plates-formes.

14. Agent de reconfiguration selon l'une des revendications 8 à 13, **caractérisé en ce qu'**il est propre à reconfigurer des composants de plates-formes, sélectionnés à partir d'un groupe comprenant des composants de modules de programmes, des composants de paramètres de programmes, des composants de protocoles de signalisation, et des composants d'interfaces de service, pour une plate-forme programmable prenant en charge des applications.

15. Produit formant programme d'ordinateur, chargeable directement dans la mémoire interne d'un agent de reconfiguration, comprenant des parties de codes de logiciel pour exécuter les étapes selon l'une des revendications 1 à 7, lorsque le produit passe sur un processeur de l'agent de reconfiguration (16).
